(19) **Europäisches Patentamt**
**European Patent Office**
**Office européen des brevets**

(11) **EP 1 430 328 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(21) Anmeldenummer: **02779119.3**

(22) Anmeldetag: **21.09.2002**

(51) Int Cl.:
*G01S 5/02* (2010.01)        *G01S 5/06* (2006.01)
*G01S 19/42* (2010.01)

(86) Internationale Anmeldenummer:
**PCT/DE2002/003577**

(87) Internationale Veröffentlichungsnummer:
**WO 2003/027705 (03.04.2003 Gazette 2003/14)**

(54) **VERFAHREN UND VORRICHTUNG ZUR BESTIMMUNG DER POSITION EINER BASISSTATION**

METHOD AND DEVICE FOR DETERMINING THE POSITION OF A BASE STATION

PROCEDE ET DISPOSITIF DE DETERMINATION DE L'EMPLACEMENT D'UNE STATION DE BASE

(84) Benannte Vertragsstaaten:
**AT BE BG CH CY CZ DE DK EE ES FI FR GB GR IE IT LI LU MC NL PT SE SK TR**

(30) Priorität: **21.09.2001 DE 10146829**

(43) Veröffentlichungstag der Anmeldung:
**23.06.2004 Patentblatt 2004/26**

(73) Patentinhaber: **Aeroflex Limited**
**Stevenage**
**Hertfordshire SG1 2AN (GB)**

(72) Erfinder: **KLENNER, Günther**
**83022 Rosenheim (DE)**

(74) Vertreter: **Verscht, Thomas Kurt Albert**
**Josephsburgstrasse 88 A**
**81673 München (DE)**

(56) Entgegenhaltungen:
**WO-A-02/071093        WO-A2-01/55803**
**DE-A- 19 713 516        DE-A- 19 912 475**
**US-A- 5 327 144        US-A- 5 608 410**
**US-A- 5 787 350        US-B1- 6 208 297**

**Beschreibung**

Die vorliegende Erfindung betrifft ein Verfahren zum Bestimmen der Position einer Basisstation gemäß dem Oberbegriff des Anspruchs 1. Ferner betrifft die Erfindung eine entsprechende Vorrichtung zur Durchführung des Verfahrens gemäß dem Oberbegriff des Anspruchs 10.

Im Stand der Technik sind Mobilfunknetze bekannt, welche eine Vielzahl von Basis- oder Feststationen aufweisen, um jeweilige Funkzellen zu versorgen. Die Basisstationen sind dabei zum Datenaustausch mit mobilen Einrichtungen, z.B. Mobiltelefonen, vorgesehen. Es ist nun wünschenswert, die Positionen der Basisstationen zu kennen. Ein wichtiger Anwendungsfall hierfür ist die Vermessung des Funknetzes. Um die Daten der Vermessung richtig auswerten zu können, bedarf es nämlich eines Planes, der die Standorte der Basisstationen aufweist. Solche Pläne sind allerdings teilweise schwer zugänglich, nicht auf dem aktuellen Stand oder gar geheim. Ebenfalls wird die Vermessung nicht von derselben Gruppe durchgeführt, die diese Pläne verwaltet. All dies erschwert die Auswertung der Meßdaten und die Analyse von Schwachstellen bzw. von Problempunkten des Funknetzes.

Zum Stand der Technik wird auf die deutsche Offenlegungsschrift DE 199 12 475 A1 hingewiesen, aus welcher ein Verfahren zur Positionsbestimmung und Navigation in Mobilfunknetzen bekannt ist. Bei diesem Verfahren werden die Funksignale und/oder die übertragenen Informationen von Sende-/Empfangseinheiten eines Mobilfunknetzes benutzt, wobei das Verfahren nach dem Prinzip der Messung der Signallaufzeiten und Entfernungsberechnung zwischen Sende-/Empfangseinheiten arbeitet.

Aus der US-Patentschrift 5,608,410 ist ein System zum Bestimmen des Ortes eines mobilen Senders offenbart. Der mobile Sender empfängt ein Nachrichtensignal und antwortet auf das Nachrichtensignal durch Übertragen eines Antwortsignals, wobei das Antwortsignal die Identität des mobilen Senders anzeigt. Dieses System kann zum Orten von Mobiltelefonen verwendet werden.

Schließlich wird auf die internationale Veröffentlichung WO 01/55803 A2 hingewiesen, aus welcher Verfahren und Vorrichtungen bekannt sind, um eine genaue Uhr in einer Basissendeempfängerstation aufrecht zu erhalten. Ortmesseinheiten, die zum Bestimmen des Ortes von Mobilstationen verwendet werden, werden eingesetzt, um die aktuelle GPS-Zeit an die Basissendeempfängerstation zu liefern. Die Basissendeempfängerstation kann dann ihre eigene Uhr aufgrund der aktuellen GPS-Zeit einstellen.

Der Erfindung liegt daher die Aufgabe zugrunde, die Nachteile des Standes der Technik zu vermeiden, und insbesondere ein Verfahren der eingangs genannten Art derart weiterzubilden, daß es auf einfache und schnelle Weise möglich ist, die Position einer Basisstation mit hoher Genauigkeit unabhängig von veröffentlichten Plänen zu bestimmen.

Diese Aufgabe wird bei einem Verfahren und einer Vorrichtung der eingangs genannten Art durch die im kennzeichnenden Teil des Anspruchs 1 bzw. 10 angegebenen Merkmale gelöst.

Ein Vorteil der vorliegenden Erfindung besteht darin, daß die Bestimmung der Position bzw. des Standorts einer Basisstation während einer Versorgungs- und Qualitätsvermessung (drive test) von zellularen Funknetzen, z.B. Mobilfunknetzen, ermöglicht wird. Damit wird eine nachfolgende Analyse der Versorgungs- und Qualitätsmessung verein-facht, da alle notwendigen Daten bereits unmittelbar nach der Vermessung vorliegen. Es müssen auch keine Zusatzdaten von weiteren Quellen beschafft werden.

Erfindungsgemäß wird jeweils aus der Differenz von zwei Zeitpunkten des Empfangs zweier Rahmen und aus der Differenz der Rahmennummern eine Laufzeitdifferenz des Signals für zwei Orte bestimmt, wobei aus wenigstens zwei derartig bestimmten Laufzeitdifferenzwerten nach dem Hyperbelortungsverfahren eine Position der Basisstation ermittelt wird. Mehr als zwei Laufzeitdifferenzwerte können insbesondere herangezogen werden, um die Genauigkeit der Messung zu erhöhen.

Dabei wird vorzugsweise die Differenz der Rahmennummern bei dem Verfahren derart berücksichtigt, daß die Laufzeitdifferenz L im Wesentlichen durch folgende Formel berechnet wird

$$L = t_1 - t_2 - [(N_2 - N_1) \cdot T]$$

wobei $t_1$ der Zeitpunkt des Empfangs des ersten Rahmens, $t_2$ der Zeitpunkt des Empfangs des zweiten Rahmens, $N_1$ die Rahmennummer des ersten Rahmens, $N_2$ die Rahmennummer des zweiten Rahmens und T im Wesentlichen die zeitliche Länge eines Rahmens ist.

Zur exakten Definition des Zeitpunkts ist bevorzugt, daß als Zeitpunkt des Empfangs des Rahmens der Empfang eines vordefinierten Abschnitts des Rahmens gewählt wird. Dabei kann der vordefinierte Abschnitt der Anfang des Rahmens oder derjenige Abschnitt, der die Rahmennummer enthält, sein.

Eine besonders einfache und kostengünstige Realisierung der vorliegenden Erfindung ergibt sich, wenn zur Bestimmung des Position und/oder des Zeitpunkts des Empfangs eines Rahmens eine Empfängereinrichtung für ein satellitengestütztes Navigationssystem vorgesehen ist. Beispielsweise ein GPS-System kann eine Positionsbestimmung sehr genau durchführen und überträgt dabei ebenfalls ein Zeitnormal an einen GPS-Empfänger basierend auf den in den Satelliten vorgesehenen Atomuhren. Vorteilhafterweise ist zur Auslösung bzw. zum Start einer Messung ein Zeitimpuls eines satellitengestützten Navigationssystems vorgesehen. Auf diese Weise ist ein exakter Zeitpunkt vorgegeben, welcher insbesondere einem Signal entspricht, welches die erfindungsgemäße Messung der Position des Ortes, der Rahmennummer sowie des Zeitpunkts des Empfangs initiiert. Der Zeitimpuls ist auch periodisch wiederkehrend, so daß er sich hervorragend zur Durchführung einer gesamten Messreihe eignet. Falls kein GPS-Empfang vorliegt, wird auch das Zeitsignal nicht ausgesendet und die (nicht mögliche) Messung gar nicht erst gestartet.

Vorteilhafterweise wird der Zeitpunkt des Empfangs des Rahmens durch einen Zeitpunkt und die Messung des zeitlichen Versatzes des Rahmes zu diesem Zeitpunkt bestimmt. Dabei ist bevorzugt, daß der Zeitpunkt durch ein Zeitnormal, insbesondere einen Zeitimpuls eines satellitengestützten Navigationssystems, vorgegeben wird. Auf diese Weise kann der Zeitimpuls unabhängig von der zu dieser Zeit empfangenen Rahmenposition empfangen werden, wobei gleichzeitig die Genauigkeit der Messung erhöht ist.

Es ist weiter bevorzugt, dass das Verfahren während einer Fahrt durch ein Gebiet zur Durchführung einer Versorgungs- und/oder Qualitätsmessung des Mobilfunknetzes in dem Gebiet durchgeführt wird. Durch die Fahrt durch das Gebiet werden laufend unterschiedliche Orte angefahren und entsprechende Messungen durchgeführt. Parallel dazu werden Messungen gemäß der vorliegenden Erfindung gemacht, so dass nach der Fahrt die Position von Basisstationen exakt bekannt ist und die Auswertung der Versorgungsmessungen aussagekräftig durchgeführt werden kann.

Weitere bevorzugte Ausführungsformen der Erfindung sind in den abhängigen Patentansprüchen offenbart.

Die Erfindung, sowie weitere Merkmale, Ziele, Vorteile und Anwendungsbeispiele derselben wird bzw. werden nachfolgend anhand einer Beschreibung unter Bezugnahme auf die beigefügten Zeichnungen näher erläutert. In den Zeichnungen bezeichnen dieselben Bezugszeichen dieselben bzw. entsprechende Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigen:

Fig. 1     eine schematische Darstellung zur Erläuterung der Downlink-Kommunikation in einem Mobilfunknetz;

Fig. 2     eine schematische Darstellung zur Erläuterung einer bevorzugten Ausführungsform der vorliegenden Erfindung, wobei gezeigt ist, wie jeweils Messungen durchgeführt werden; und

Fig. 3     eine schematische Darstellung zur Erläuterung einer bevorzugten Ausführungsform der vorliegenden Erfindung, wobei gezeigt ist, wie aus jeweiligen Messungen gemäß Fig. 2 die Position einer Basisstation bestimmt wird.

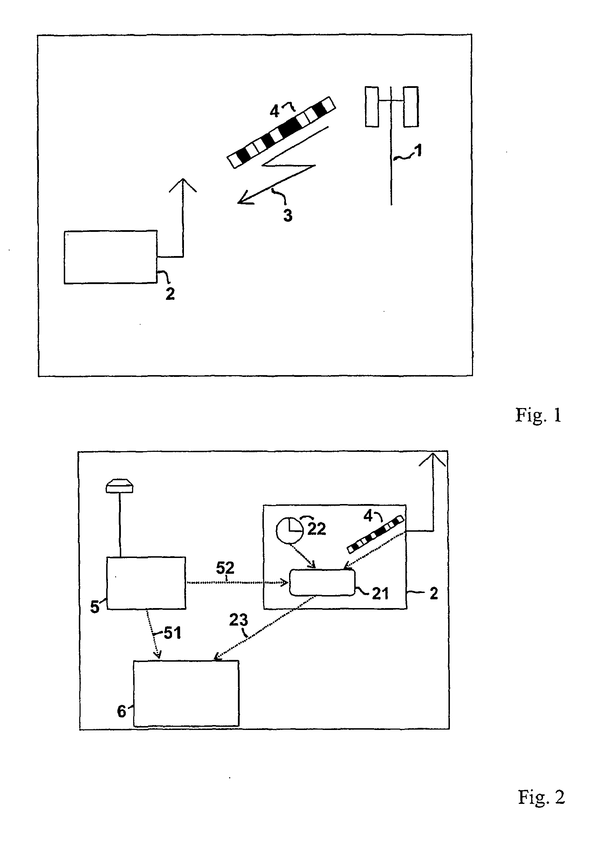

In Fig. 1 ist schematisch eine Basis- oder Feststation 1 gezeigt, welche zu einem Mobilfunknetz, z.B. einem GSM-Netz (GSM = global system of mobile communications), gehört. Im Betrieb kommuniziert die Basisstation über den Up- bzw. Downlink-Kanal mit Mobilstationen, beispielsweise Mobiltelefonen oder Handys. Ferner ist ein Empfänger 2 gezeigt, welcher eine Antenne aufweist, und die durch den Pfeil 3 (Downlink) von der Basisstation 2 gesendeten Signale empfängt. Diese Signal werden in Blöcken, sogenannten "frames" bzw. "Rahmen" 4, ausgesandt. Dabei weisen die von der Basisstation 1 ausgesandten Rahmen jeweils eine fortlaufende Rahmennummer auf. Die Länge eines Rahmens ist dabei mit einer hohen Genauigkeit konstant und liegt im Bereich von etwa 4,6 ms. Im Betrieb des Mobilfunknetzes ist der Empfänger 2 ein Mobiltelefon. Bei an sich bekannten Versorgungs- und Qualitätsvermessungen (drive test) des Funknetzes im Bereich der Basisstation 1 ist der Empfänger 2 ein Testmobiltelefon, welches in einem Kraftfahrzeug in einem Gebiet um die Basisstation 1 herumgefahren wird, um dieses auszumessen. Dabei ist ein mögliches Ziel einer derartigen Versorgungsmessung festzustellen, ob es Bereiche gibt, in denen der Empfang beispielsweise durch natürliche Hindernisse beeinträchtigt ist.

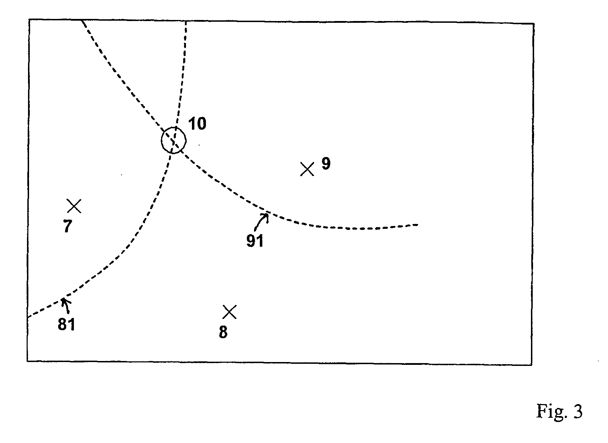

Anhand der Fig. 2 und 3 wird im Folgenden der Aufbau der erfindungsgemäßen Vorrichtung und der Betrieb gemäß der vorliegenden Erfindung näher erläutert. Die erfindungsgemäße Vorrichtung bzw. System weist eine Empfangseinrichtung 2 auf, welche bevorzugt ein Testmobiltelefon ist. Die Empfangseinrichtung 2 weist einen Decoder 21 zum Decodieren der von der Basisstation 1 übertragenen Signale auf. Ferner weist die Vorrichtung eine Positionsbestimmungseinrichtung auf, welche vorzugsweise ein GPS-Empfänger 5 (GPS = global positioning system) ist. Selbstverständlich können auch andere geeignete Positionsbestimmungseinrichtungen, insbesondere satellitengestützte Einrichtungen basierend auf einem anderen Satellitensystem als dem GPS-System, in Verbindung mit der Erfindung verwendet werden. Schließlich weist die Vorrichtung eine Zeitbestimmungs- bzw. -messeinrichtung bzw. Uhr auf, welche vorzugsweise ebenfalls durch den GPS-Empfänger 5 realisiert ist. Gemäß dem GPS-System wird an einen GPS-Empfänger 5 nicht nur Information bezüglich des Standortes sondern auch ein hochgenaues Zeitsignal gesendet. Als hochpräzise Zeitbestimmungseinrichtung kann aber grundsätzlich auch eine andere geeignete Einrichtung beispielsweise eine Atom- oder Funkuhr verwendet werden. Insbesondere kann die verwendete Zeitbestimmungseinrichtung von der Positionsbestimmungseinrichtung unabhängig und separat vorgesehen sein. Im bevorzugten Ausführungsbeispiel sind diese aber als Einheit im GPS-Empfänger 5 ausgebildet.

Die Vorrichtung wird regelmäßig in oder an einem Fahrzeug zu einer Meßfahrt eingesetzt. An einer Position, welche beispielsweise durch eine Betätigung einer Bedienungsperson ausgelöst oder automatisch, beispielsweise in regelmäßigen Zeit- oder Ortsabständen, durchgeführt wird, wird neben der Messung der Qualität des Funknetzes eine Messung gemäß der vorliegenden Erfindung durchgeführt. Vorzugsweise wird eine Messung durch einen GPS-Zeitimpuls ausgelöst, wie im Folgenden noch näher erläutert wird. Der GPS-Empfänger 5 liefert dazu hochgenau einen absoluten Zeitpunkt, im folgenden $t_1$ genannt. Ferner wird der zu diesem Zeitpunkt (nächste) empfangene Rahmen 4 des von der Basisstation empfangenen Signals vom Decoder 21 decodiert. Der Decoder 21 decodiert nicht nur die empfangenen Informationssignale, sondern insbesondere auch die Rahmennummer $r_1$ des Rahmens 4. Eine derartige Rahmennummer ist, wie oben in Verbindung mit Fig. 1 beschrieben wurde, eine Eigenschaft aller digitalen Funknetze. Diese Rahmennummer stellt, wie durch die vorliegende Erfindung erkannt wurde, ebenfalls ein relatives Zeitnormal dar. Beim Empfang des GPS-Zeitimpulses wird ein Zähler 22 gestartet. Der Zähler bzw. Zeitgeber (Zeittrigger) 22 liefert den zeitlichen Versatz $v_1$ des empfangenen Rahmens mit Rahmennummer $r_1$ zu dem absoluten Zeitpunkt $t_1$. Der Versatz $v_1$ ist dabei beispielsweise als die zeitliche Differenz zwischen dem absoluten Zeitpunkt und dem Beginn des Rahmens definiert. Alternativ kann der Versatz durch den Abschnitt des Rahmens 4 definiert werden, in welchem die Rahmennummer $r_1$ übertragen wird. Dazu werden zu dem Zeitpunkt $t_1 + v_1$ die Positionsdaten 51 des GPS-Empfängers 5, d.h. der Ort $x_1$ des Fahrzeugs, in einer Datenbank 6 abgelegt. In der Datenbank 6 wird ferner die Rahmennummer $r_1$, sowie der zeitliche Versatz $v_1$ des absoluten Zeitpunkts $t_1$ zum Rahmenempfang zusätzlich zu dem absoluten Zeitpunkt $t_1$ und diesem zugeordnet gespeichert. Somit erhält man zu einem bekannten örtlichen Bezugspunkt auch einen zeitlichen Referenzpunkt, die für eine Analyse gespeichert werden.

Entsprechend wird, wenn sich das Fahrzeug weiterbewegt hat, zum vom GPS gelieferten absoluten Zeitpunkt $t_2$ vom Decoder 21 die Rahmennummer $r_2$ des (nächsten) Rahmens 4 decodiert und der Versatz $v_2$ bestimmt. Ferner werden zu dem Zeitpunkt $t_2 + v_2$ die Positionsdaten 51 des GPS-Empfängers 5, d.h. der Ort $x_2$ des Fahrzeugs, in der Datenbank 6 abgelegt. In dem Speicher 6 wird zusätzlich die Rahmennummer $r_2$, sowie der zeitliche Versatz $v_2$ des absoluten Zeitpunkts $t_2$ zum Rahmenempfang zusätzlich zu dem absoluten Zeitpunkt $t_2$ und diesem zugeordnet gespeichert. Da die Rahmen 4 in festen Zeitintervallen gesendet werden, und zwar mit hoher Genauigkeit etwa alle 4,6 ms, was der Rahmenlänge entspricht, und der Rahmennummerunterschied $r_2 - r_1$ bekannt ist, kann man die Laufzeitdifferenz berechnen. Wenn die beiden Rahmen mit den Nummern

$r_1$ bzw. $r_2$ gleichzeitig von der Basisstation ausgesandt worden wären, wäre die Laufzeitdifferenz einfach die Differenz der absoluten Zeitpunkte des Empfangs der Rahmen $r_1$ und $r_2$ an den beiden Orten $x_1$ bzw. $x_2$, d.h. $(t_1+v_1)$ - $(t_2+v_2)$. Um nun die reale Laufzeitdifferenz Rahmen $r_1$ und $r_2$ an den beiden Orten $x_1$ bzw. $x_2$ zu erhalten, muß die Differenz der Aussendezeitpunkte der beiden Rahmen von $(t_1+v_1)$ - $(t_2+v_2)$ abgezogen werden. Die Laufzeitdifferenz beträgt daher $(t_1+v_1)$ - $(t_2+v_2)$ - [($r_2$ - $r_1$)·4,6ms].

Ausgehend von der an den Orten $x_1$ bzw. $x_2$ ermittelten Laufzeitdifferenz wird nun die Position der Basisstation mit Hilfe eines Hyperbelortungsverfahrens bestimmt. Hierzu wird auf die Fig. 3 verwiesen. Diese Laufzeitdifferenz des Funksignals zwischen zwei Orten 7, 8 (entsprechend den vorerwähnten $x_1$ bzw. $x_2$) bildet einen Teil der Hyperbel-Ortung. Auf eine Karte würden alle möglichen Sendestandorte, d.h. Positionen der die der Messung zugrunde liegenden Rahmen aussendenden Basisstation, von denen diese Laufzeitdifferenz entstehen würde, auf einer Hyperbellinie 81 stehen. Kommt nun eine weitere Laufzeitdifferenz hinzu, beispielsweise entweder von einem dritten Ort 9 ($x_3$) oder zwei weiteren Orten $x_3$ bzw. $x_4$, wird eine zweite Hyperbel 91 definiert. Somit befindet sich die Basisstation 1 am Schnittpunkt 10 beider Hyperbeln 81, 91. Die Auswertung wird vorzugsweise von einem entsprechenden Mikroprozessor bzw. PC durchgeführt.

Mathematische Verfahren können die Ergebnisse mehrfacher Vermessung zur Eliminierung von Meßfehlern nutzen und dabei die Zielposition noch genauer bestimmen. Dies ist besonders im oben genannten Anwendungsfall interessant, da dies kontinuierlich mit den sekündlichen GPS-Zeitimpulsen durchgeführt werden kann und somit sehr viele Meßdaten zur Verfügung stehen.

Bezugszeichenliste:

| | |
|---|---|
| 1 | .Basis- oder Feststation |
| 2 | Empfangseinrichtung oder Testmobile |
| 21 | Decoder |
| 22 | Zeitgeber |
| 23 | Rahmennummer + Versatz |
| 3 | Funkweg |
| 4 | Datenblock (Rahmen) |
| 5 | (GPS-)Empfängereinrichtung |
| 51 | Positionsdaten |
| 52 | Zeitimpuls |
| 6 | Datensammler |
| 7 | erster Meßpunkt |
| 8 | zweiter Meßpunkt |
| 81 | Peillinie des ersten und zweiten Meßpunkt |
| 9 | dritter Meßpunkt |
| 91 | Peillinie zweiter und dritter Meßpunkt |
| 10 | Zielposition |

**Patentansprüche**

1. Verfahren zur Bestimmung der Position einer Basisstation (1) eines Mobilfunknetzes, wobei an wenigstens drei Orten jeweils die Position des Ortes, eine Nummer eines Rahmens (4) eines von der Basisstation empfangenen Signals sowie der Zeitpunkt des Empfangs des Rahmens (4) bestimmt wird, wobei hieraus die Position der Basisstation (1) ermittelt wird,
   **dadurch gekennzeichnet, daß** jeweils aus der Differenz von zwei Zeitpunkten des Empfangs zweier Rahmen (4) und aus der Differenz der Rahmennummern eine Laufzeitdifferenz des Signals für zwei Orte bestimmt wird, wobei aus wenigstens zwei derartig bestimmten Laufzeitdifferenzwerten nach dem Hyperbelortungsverfahren eine Position der Basisstation (1) ermittelt wird.

2. Verfahren nach Anspruch 1, **dadurch gekennzeichnet, daß** die Laufzeitdifferenz L im Wesentlichen durch folgende Formel berechnet wird

$$L = t_1 - t_2 - [(N_2 - N_1) \cdot T]$$

   wobei $t_1$ der Zeitpunkt des Empfangs des ersten Rahmens, $t_2$ der Zeitpunkt des Empfangs des zweiten Rahmens, $N_1$ die Rahmemummer des ersten Rahmens, $N_2$ die Rahmennummer des zweiten Rahmens und T im Wesentlichen die zeitliche Länge eines Rahmens (4) ist.

3. Verfahren nach Anspruch 1 oder 2, **dadurch gekennzeichnet, daß** als Zeitpunkt des Empfangs eines Rahmens (4) der Empfang eines vordefinierten Abschnitts des Rahmens (4) gewählt wird.

4. Verfahren nach Anspruch 3, **dadurch gekennzeichnet, daß** der vordefinierte Abschnitt der Anfang des Rahmens (4) oder derjenige Abschnitt, der die Rahmennummer enthält, ist.

5. Verfahren nach einem der Ansprüche 1 bis 4, **dadurch gekennzeichnet, daß** zur Bestimmung der Position und/oder des Zeitpunkts des Empfangs eines Rahmens (4) eine Empfängereinrichtung (5) für ein satellitengestütztes Navigationssystem vorgesehen ist.

6. Verfahren nach einem der Ansprüche 1 bis 5, **dadurch gekennzeichnet, daß** der Zeitpunkt des Empfangs eines Rahmens (4) durch einen absoluten Zeitpunkt und die Messung des zeitlichen Versatzes des Rahmes (4) zu diesem absoluten Zeitpunkt bestimmt wird.

7. Verfahren nach Anspruch 6, **dadurch gekennzeichnet, daß** der absolute Zeitpunkt durch ein Zeitnormal, insbesondere einen Zeitimpuls eines satellitengestützten Navigationssystems, vorgegeben wird.

8. Verfahren nach Anspruch 7, **dadurch gekennzeichnet, daß** durch einen Zeitimpuls eines satellitengestützten Navigationssystems die folgenden Verfahrensschritten ausgelöst werden:

   ■ Beim Empfang des Zeitimpulses wird ein Zähler (22) gestartet,
   ■ Die Nummer des nach dem Zeitimpuls nächsten empfangenen Rahmens (4) des von der Basisstation empfangenen Signals wird bestimmt,
   ■ Der Zähler (22) liefert den zeitlichen Versatz des empfangenen Rahmens (4) zu einem absoluten Zeitpunkt, der durch den Zeitimpuls vorgegeben wird, und
   ■ Die Position des Ortes zum Zeitpunkt des Empfangs des Rahmens wird bestimmt.

9. Verfahren nach einem der Ansprüche 1 bis 8, **dadurch gekennzeichnet, daß** das Verfahren während einer Fahrt durch ein Gebiet zur Durchführung einer Versorgungs- und/oder Qualitätsmessung des Mobilfunknetzes in dem Gebiet durchgeführt wird.

10. Vorrichtung zur Bestimmung der Position einer Basisstation (1) eines Mobilfunknetzes, insbesondere zur Durchführung eines Verfahrens gemäß einem der vorhergehenden Ansprüche, wobei die Vorrichtung eine Positionsbestimmungseinrichtung, eine Decodiereinrichtung (21) und eine Zeitbestimmungseinrichtung aufweist, wobei an wenigstens drei Orten jeweils die Positionsbestimmungseinrichtung die Position des Ortes, die Decodiereinrichtung (21) eine Nummer eines Rahmens eines von der Basisstation empfangenen Signals und die Zeitbestimmungseinrichtung den Zeitpunkt des Empfangs des Rahmens (4) bestimmt, wobei hieraus die Position der Basisstation (1) ermittelt wird,
    **dadurch gekennzeichnet, daß** jeweils aus der Differenz von zwei Zeitpunkten des Empfangs zweier Rahmen (4) und aus der Differenz der Rahmennummern eine Laufzeitdifferenz des Signals für zwei Orte bestimmt wird, wobei aus wenigstens zwei derartig bestimmten Laufzeitdifferenzwerten nach dem Hyperbelortungsverfahren eine Position der Basisstation (1) ermittelt wird.

11. Vorrichtung nach Anspruch 10, **dadurch gekennzeichnet, daß** die Laufzeitdifferenz L im Wesentlichen durch folgende Formel berechnet wird

$$L = t_1 - t_2 - [(N_2\text{-}N_1)\cdot T]$$

wobei $t_1$ der Zeitpunkt des Empfangs des ersten Rahmens, $t_2$ der Zeitpunkt des Empfangs des zweiten Rahmens, $N_1$ die Rahmennummer des ersten Rahmens, $N_2$ die Rahmennummer des zweiten Rahmens und T im Wesentlichen die zeitliche Länge eines Rahmens (4) ist.

12. Vorrichtung nach Anspruch 10 oder 11, **dadurch gekennzeichnet, daß** als Zeitpunkt des Empfangs eines Rahmens (4) der Empfang eines vordefinierten Abschnitts des Rahmens (4) gewählt wird.

13. Vorrichtung nach Anspruch 12, **dadurch gekennzeichnet, daß** der vordefinierte Abschnitt der Anfang des Rahmens (4) oder derjenige Abschnitt, der die Rahmennummer enthält, ist.

14. Vorrichtung nach einem der Ansprüche 10 bis 13, **dadurch gekennzeichnet, daß** als Positionsbestimmungseinrichtung und/oder als Zeitbestimmungseinrichtung des Empfangs eines Rahmens (4) eine Empfängereinrichtung (5) für ein satellitengestütztes Navigationssystem vorgesehen ist.

15. Vorrichtung nach einem der Ansprüche 10 bis 14, **dadurch gekennzeichnet, daß** die Vorrichtung eine Zählereinrichtung (22) aufweist, wobei der Zeitpunkt des Empfangs eines Rahmens (4) durch einen absoluten Zeitpunkt und die durch die Zählereinrichtung (22) durchgeführte Messung des zeitlichen Versatzes des Rahmes (4) zu diesem absoluten Zeitpunkt bestimmt wird.

16. Vorrichtung nach Anspruch 15, **dadurch gekennzeichnet, daß** der absolute Zeitpunkt durch ein Zeitnormal, insbesondere einen Zeitimpuls eines satellitengestützten Navigationssystems, vorgegeben wird.

17. Vorrichtung nach Anspruch 16, **dadurch gekennzeichnet, daß** durch einen Zeitimpuls eines satellitengestützten Navigationssystems die folgenden Verfahrensschritten ausgelöst werden:

   ■ Beim Empfang des Zeitimpulses wird ein Zähler (22) gestartet,
   ■ Die Nummer des nach dem Zeitimpuls nächsten empfangenen Rahmens (4) des von der Basisstation empfangenen Signals wird bestimmt,
   ■ Der Zähler (22) liefert den zeitlichen Versatz des empfangenen Rahmens (4) zu einem absoluten Zeitpunkt, der durch den Zeitimpuls vorgegeben wird, und

   ■ Die Position des Ortes zum Zeitpunkt des Empfangs des Rahmens wird bestimmt.

18. Vorrichtung nach einem der Ansprüche 10 bis 17, **dadurch gekennzeichnet, daß** die Vorrichtung in oder an einem Fahrzeug angeordnet ist, um während einer Fahrt durch ein Gebiet zur Durchführung einer Versorgungs- und/oder Qualitätsmessung des Mobilfunknetzes in dem Gebiet durchzuführen.

19. Vorrichtung nach einem der Ansprüche 10 bis 18, **dadurch gekennzeichnet, daß** die Decodiereinrichtung (21) in einem Messmobiltelefon ausgebildet ist.

**Claims**

1. Method for determining the position of a base station (1) in a mobile radio network, wherein the position of the location, a number of a frame (4) of a signal which is received from the base station as well as the time of reception of the frame (4) are each determined at at least three locations, with the position of the base station (1) being determined from this, **characterized in that** a propagation time difference of the signal for two locations is determined in each case from the difference between two times of reception of two frames (4) and from the difference between the frame numbers, with a position of the base station (4) being determined using the hyperbolic position finding method from at least two propagation time difference values determined in this way.

2. Method as claimed in claim 1, **characterized in that** the propagation time difference L is essentially calculated using the following formula

$$L = t_1 - t_2 - [(N_2\text{-}N_1)\cdot T]$$

where $t_1$ is the time of reception of the first frame, $t_2$ is the time of reception of the second frame, $N_1$ is the frame number of the first frame, $N_2$ is the frame number of the second frame and T is essentially the time duration of a frame (4).

3. Method as claimed in claim 1 or 2, **characterized in that** the reception of a predefined section of the frame (4) is chosen as the time of reception of the frame (4).

4. Method as claimed in claim 3, **characterized in that** the predefined section is the start of the frame (4) or that section which contains the frame number.

**5.** Method as claimed in any of claims 1 to 4, **characterized in that** a receiver device (5) for a satellite-assisted navigation system is provided in order to determine the position and/or the time of reception of a frame (4).

**6.** Method as claimed in any of claims 1 to 5, **characterized in that** the time of reception of the frame (4) is determined by an absolute time and by the measurement of the time offset of the frame (4) with respect to this absolute time.

**7.** Method as claimed in claim 6, **characterized in that** the time is predetermined by a time standard, in particular, a time pulse from a satellite-assisted navigation system.

**8.** Method as claimed in any of claims 1 to 7, **characterized in that** by a time pulse of a satellite-assisted navigation system the following method steps are initiated:

· Upon Reception of the GPS time pulse a counter is started,
· The number of the next receivable frame after the time pulse of the signal received by the base station is determined,
·The counter provides the time offset of the received frame to an absolute time which is provided by the time pulse, and
· The position of the location at the time of the reception of the frame is determined.

**9.** Method as claimed in any of claims 1 to 8, **characterized in that** the method is carried out while driving through a region in order to carry out a supply measurement and/or quality measurement of the mobile radio network **in that** region.

**10.** Apparatus for determining the position of a base station (1) in a mobile radio network, in particular, for carrying out the method as claimed in any of the preceding claims, wherein the apparatus comprises a position determining device, a decoding device (21) and a time determining device, with the position determining device determining the position of the location, the decoding device (21) determining the number of a frame of a signal which is received from the base station, and the time determining device determining the time of reception of the frame (4) at each of at least three locations, and with the position of the base station (1) being determined from this, **characterized in that** a propagation time difference of the signal is determined for each of two locations from the difference between two times of reception of two frames (4) and from the difference between the frame numbers, with a position of the base station (1) being determined from at least two propagation time difference values determined in this way, using the hyperbolic position finding method.

**11.** Apparatus as claimed in claim 10, **characterized in that** the propagation time difference L is essentially calculated using the following formula

$$L = t_1 - t_2 - [(N_2 - N_1) \cdot T]$$

where $t_1$ is the time of reception of the first frame, $t_2$ is the time of reception of the second frame, $N_1$ is the frame number of the first frame, $N_2$ is the frame number of the second frame and $T$ is essentially the time duration of a frame (4).

**12.** Apparatus as claimed in claim 10 or 11, **characterized in that** the reception of a predefined section of the frame (4) is chosen as the time of reception of the frame (4).

**13.** Apparatus as claimed in claim 12, wherein the predefined section is the start of the frame (4) or that section which contains the frame number.

**14.** Apparatus as claimed in any of claims 10 to 13, **characterized in that** a receiver device (5) for a satellite-assisted navigation system is provided as the position determining device and/or as the time determining device for reception of a frame (4).

**15.** Apparatus as claimed in any of claims 10 to 14, **characterized in that** by a time pulse of a satellite-assisted navigation system the following method steps are initiated:

· Upon Reception of the GPS time pulse a counter is started,
· The number of the next receivable frame after the time pulse of the signal received by the base station is determined,
· The counter provides the time offset of the received frame to an absolute time which is provided by the time pulse, and
· The position of the location at the time of the reception of the frame is determined.

**16.** Apparatus as claimed in any of claims 10 to 15, **characterized in that** the apparatus comprises a counter device (22), with the time of reception of the frame (4) being determined by an absolute time and by the measurement, which is carried out by the counter device (22), of the time offset of the frame (4) with respect to this absolute time.

**17.** Apparatus as claimed in claim 16, wherein the time is predetermined by a time standard, in particular, a time pulse from a satellite-assisted navigation system.

18. Apparatus as claimed in any of claims 10 to 17, <u>**characterized in that**</u> the apparatus is arranged in or on a vehicle in order to carry out while driving through a region in order to carry out a supply measurement and/or quality measurement of the mobile radio network **in that** region.

19. Apparatus as claimed in any of claims 10 to 18, <u>**characterized in that**</u> the decoding device (21) is embodied in a measurement mobile telephone.

## Revendications

1. Procédé pour définir la position d'une station de base (1) d'un réseau de téléphonie mobile, étant précisé qu'à au moins trois endroits sont définis la position de l'endroit, un numéro d'une trame (4) d'un signal reçu par la station de base ainsi que le moment de la réception de la trame (4), la position de la station de base (1) étant déterminée à partir de là, **caractérisé en ce que**, à partir de la différence de deux moments de la réception de deux trames (4) et à partir de la différence des numéros de trame, une différence de temps de propagation du signal pour deux endroits est définie, étant précisé qu'à partir d'au moins deux valeurs de différence de temps de propagation ainsi définies, une position de la station de base (1) est déterminée selon le procédé de localisation hyperbolique.

2. Procédé selon la revendication 1, **caractérisé en ce que** la différence de temps de propagation L est calculée essentiellement grâce à la formule suivante

$$L = t_1 - t_2 - [(N_2 - N_1).T]$$

$t_1$ désignant le moment de la réception de la première trame, $t_2$ le moment de la réception de la seconde trame, $N_1$ le numéro de trame de la première trame, $N_2$ le numéro de trame de la seconde trame et T essentiellement la longueur temporelle d'une trame (4).

3. Procédé selon la revendication 1 ou 2, **caractérisé en ce qu'**on choisit comme moment de la réception d'une trame (4) la réception d'un tronçon prédéfini de la trame (4).

4. Procédé selon la revendication 3, **caractérisé en ce que** le tronçon prédéfini est constitué par le début de la trame (4) ou par le tronçon qui contient le numéro de trame.

5. Procédé selon l'une des revendications 1 à 4, **caractérisé en ce que** pour définir la position et/ou le moment de la réception d'une trame (4), il est prévu un dispositif récepteur (5) pour un système de navigation par satellite.

6. Procédé selon l'une des revendications 1 à 5, **caractérisé en ce que** le moment de la réception d'une trame (4) est défini par un moment absolu et par la mesure du décalage dans le temps de la trame (4) par rapport à ce moment absolu.

7. Procédé selon la revendication 6, **caractérisé en ce que** le moment absolu est prédéfini par une normale de temps, en particulier une impulsion d'horloge d'un système de navigation par satellite.

8. Procédé selon la revendication 7, **caractérisé en ce que** grâce à une impulsion d'horloge d'un système de navigation par satellite, les étapes de procédé suivantes sont déclenchées :

   - lors de la réception de l'impulsion d'horloge, un compteur (22) est démarré,
   - le numéro de la trame (4) suivante reçue après l'impulsion d'horloge du signal reçu par la station de base est défini,
   - le compteur (22) fournit le décalage dans le temps de la trame (4) reçue, par rapport à un moment absolu qui est prédéfini par l'impulsion d'horloge, et
   - la position de l'endroit au moment de la réception de la trame est définie.

9. Procédé selon l'une des revendications 1 à 8, **caractérisé en ce que** le procédé est mis en oeuvre pendant un trajet traversant une zone pour la mise en oeuvre d'une mesure d'alimentation et/ou de qualité du réseau de téléphonie mobile dans ladite zone.

10. Dispositif pour définir la position d'une station de base (1) d'un réseau de téléphonie mobile, en particulier pour la mise en oeuvre d'un procédé selon l'une des revendications précédentes, étant précisé que le dispositif comporte un dispositif de définition de position, un dispositif de décodage (21) et un dispositif de définition de l'heure, et qu'à au moins trois endroits, le dispositif de définition de position définit la position de l'endroit, le dispositif de décodage (21) définit un numéro d'une trame d'un signal reçu par la station de base et le dispositif de définition de l'heure définit le moment de la réception de la trame (4), et qu'à partir de là, la position de la station de base (1) est déterminée, **caractérisé en ce que**, à partir de la différence de deux moments de la réception de deux trames (4) et à partir de la différence des numéros de trame, une différence de temps de propagation du signal pour deux endroits est définie, étant précisé qu'à partir d'au moins deux valeurs de différence de temps de propagation ainsi définies, une position de la station de base (1) est déterminée selon le procédé de localisation hyperbolique.

**11.** Dispositif selon la revendication 10, **caractérisé en ce que** la différence de temps de propagation L est calculée essentiellement grâce à la formule suivante

$$L = t_1 - t_2 - [(N_2 - N_1) \cdot T]$$

$t_1$ désignant le moment de la réception de la première trame, $t_2$ le moment de la réception de la seconde trame, $N_1$ le numéro de trame de la première trame, $N_2$ le numéro de trame de la seconde trame et T essentiellement la longueur temporelle d'une trame (4).

**12.** Dispositif selon la revendication 10 ou 11, **caractérisé en ce qu'**on choisit comme moment de la réception d'une trame (4) la réception d'un tronçon prédéfini de la trame (4).

**13.** Dispositif selon la revendication 12, **caractérisé en ce que** le tronçon prédéfini est constitué par le début de la trame (4) ou par le tronçon qui contient le numéro de trame.

**14.** Dispositif selon l'une des revendications 10 à 13, **caractérisé en ce que** comme dispositif de définition de position et/ou comme dispositif de définition de l'heure de la réception d'une trame (4), il est prévu un dispositif récepteur (5) pour un système de navigation par satellite.

**15.** Dispositif selon l'une des revendications 10 à 14, **caractérisé en ce que** le dispositif comporte un dispositif compteur (22), étant précisé que le moment de la réception d'une trame (4) est défini par un moment absolu, et la mesure, effectuée par le dispositif compteur (22), du décalage dans le temps de la trame (4) est définie par rapport à ce moment absolu.

**16.** Dispositif selon la revendication 15, **caractérisé en ce que** le moment absolu est prédéfini par une normale de temps, en particulier une impulsion d'horloge d'un système de navigation par satellite.

**17.** Dispositif selon la revendication 16, **caractérisé en ce que** grâce à une impulsion d'horloge d'un système de navigation par satellite, les étapes de procédé suivantes sont déclenchées :

- lors de la réception de l'impulsion d'horloge, un compteur (22) est démarré,

- le numéro de la trame (4) suivante reçue après l'impulsion d'horloge du signal reçu par la station de base est défini,
- le compteur (22) fournit le décalage dans le temps de la trame (4) reçue, par rapport à un moment absolu qui est prédéfini par l'impulsion d'horloge, et
- la position de l'endroit au moment de la réception de la trame est définie.

**18.** Dispositif selon l'une des revendications 10 à 17, **caractérisé en ce que** le dispositif est disposé dans ou sur un véhicule afin de mettre en oeuvre le procédé pendant un trajet traversant une zone pour la mise en oeuvre d'une mesure d'alimentation et/ou de qualité du réseau de téléphonie mobile dans ladite zone.

**19.** Dispositif selon l'une des revendications 10 à 18, **caractérisé en ce que** le dispositif de décodage (21) est conçu dans un téléphone mobile de mesure.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19912475 A1
- US 5608410 A

- WO 0155803 A2